# EUROPEAN PATENT SPECIFICATION

(11) **EP 3 509 933 B1**
(45) Date of publication and mention of the grant of the patent: **17.06.2020**
(21) Application number: 17772150.3
(22) Date of filing: 05.09.2017
(51) Int. Cl.: B62D 29/00, B62D 25/24

(54) **EXPANDABLE HOLE PLUG**
ERWEITERBARER LOCHSTOPFEN
BOUCHON DE TROU EXPANSIBLE

(30) Priority: 09.09.2016 JP 2016176552
(43) Date of publication of application: 17.07.2019
(73) Proprietor: Illinois Tool Works Inc., Glenview, IL 60025 (US)
(72) Inventor: IMAZU, Norikaze, Glenview, IL 60025 (US)
(74) Representative: HGF Limited
(86) International application number: PCT/US2017/050007
(87) International publication number: WO 2018/048764

(56) References cited:
- WO-A1-2012/157614
- WO-A1-2015/012937
- US-A1- 2016 244 104

## Description

### [Technical Field]

The present invention relates to an expandable hole plug for closing off a hole formed in a workpiece.

### [Prior Art]

There are various kinds of workpieces comprising a panel in which a hole is formed in order to insert or secure a fastener, or allow tubing, wiring, or the like to pass therethrough during an assembly process. In automobile manufacturing, for example, a workpiece such as a panel or frame may be electrodeposition coated. In the electrodeposition process, the workpiece is immersed in a tank of electrodeposition paint. A drainage outlet formed in such a way as to discharge the electrodeposition paint when the workpiece has been lifted from the electrodeposition paint tank is provided in such cases. This kind of drainage outlet is closed off by means of a hole plug after the coating so as to ensure that moisture and acoustic energy do not pass through the hole.

Meanwhile, it may be difficult to access the drainage outlet after the workpiece has been assembled. For example, when a workpiece is fixed to an external plate of an automobile, it may no longer be possible for an operator to insert the hole plug into the drainage outlet formed in the workpiece because of a panel other than the external plate, e.g., an interior panel. Patent Document 1 describes a hole plug for solving this kind of problem.

### [Prior Art Document]

### [Patent Document]

[Patent Document 1] WO 2015/012937 A1

### [Summary of the Invention]

### [Problem to be Solved by the Invention]

The hole plug described in Patent Document 1 can be fitted into a hole formed in a workpiece prior to assembly, but if the workpiece is a panel for making an automobile body, for example, holes of various dimensions are formed in the panel, which is therefore a problem in that it is necessary to prepare hole plugs of various sizes to match the size of hole.

The technical issue addressed by the present invention lies in solving this problem in the prior art, and the aim thereof lies in providing a hole plug suitable for holes of various dimensions.

WO 2012/157614 A1 discloses a hole plug comprising curved, elastically deformable legs which are able to flex to fit holes of different diameter, but the device does not have the central opening or the expandable sealant layer of the present invention.

US 2016/244104 A1 discloses a further example of a hole plug featuring an expandable sealant layer but not in combination with the central opening of the present invention.

### [Means for Solving the Problem]

In order to achieve the abovementioned aim, the present invention provides a hole plug which is fixable in a hole formed in a workpiece, comprising: a main body having a center opening; a fixing member for fixing the main body in the hole in the workpiece; and an annular expansion layer attached to the main body, which expands inside the hole to form a liquid-tight shield, wherein the fixing member is formed in such a way as to be insertable into the hole when the hole plug is to be fixed in the hole, and said fixing member is engageable with an inner edge portion of the hole at various radial positions according to the diameter of said hole when said hole plug is fixed in the hole, the fixing member being subjectable to a force from the inner edge portion of the hole to the inside in the radial direction so that resistance to removal from the hole is produced.

### [Advantage of the Invention]

According to the present invention, a fixing member is engageable with an inner edge portion of a hole formed in a workpiece such as a plate at various radial positions according to the diameter of said hole when the hole plug is fixed in the hole, the fixing member being subjectable to a force from the inner edge portion of the hole to the inside in the radial direction so that resistance to removal from the hole is produced, and therefore it is possible to fix the hole plug in holes of various diameters.

### [Brief Description of the Drawings]

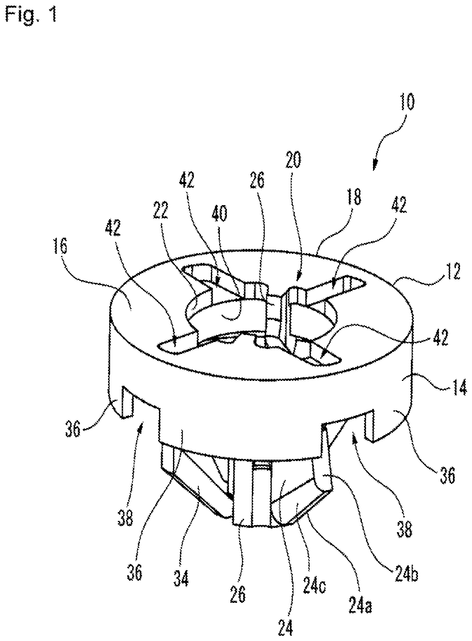

[Fig. 1] is an oblique view seen from above of a hole plug according to a preferred mode of embodiment of the present invention;

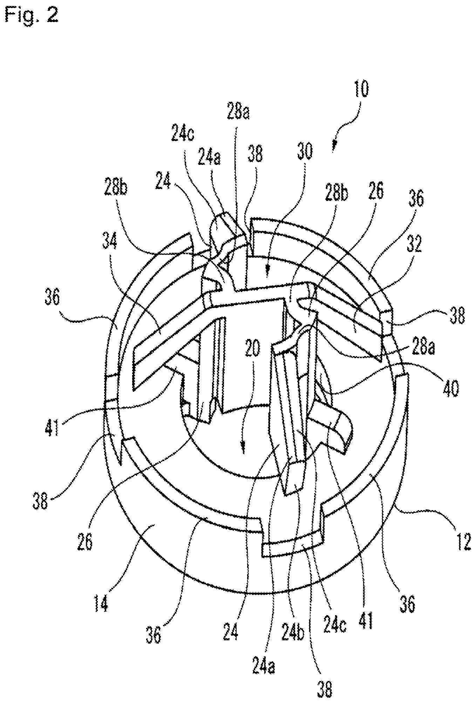

[Fig. 2] is an oblique view seen from below of the hole plug in fig. 1;

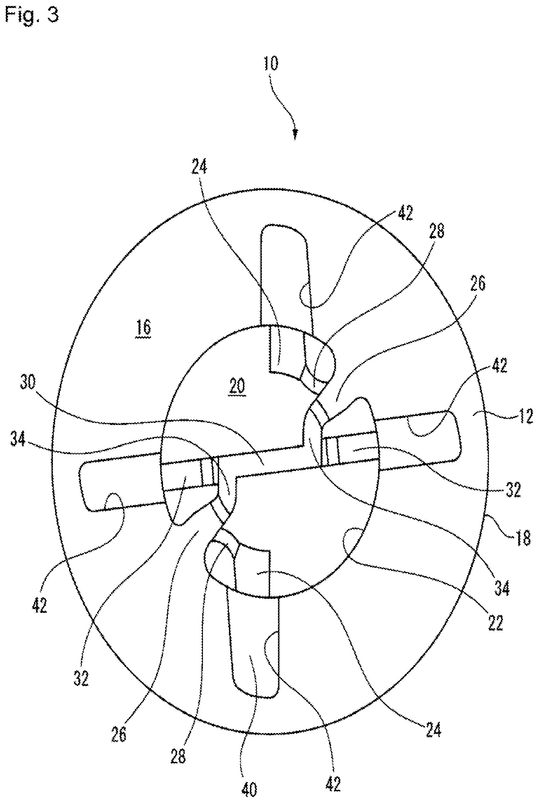

[Fig. 3] is a top view of the hole plug in fig. 1;
[Fig. 4] is a bottom view of the hole plug in fig. 1;

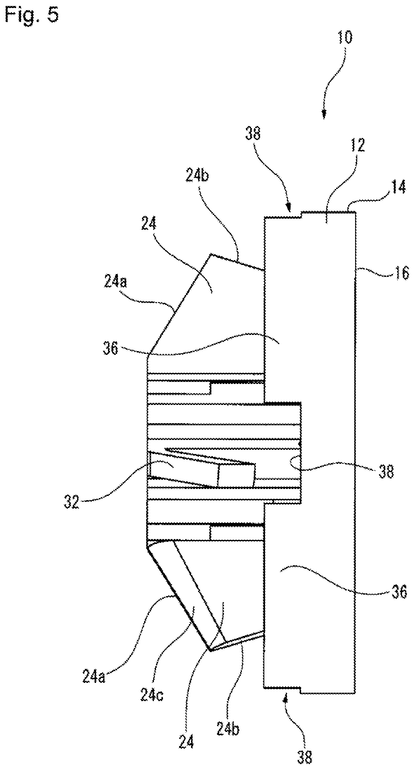

[Fig. 5] is a side view of the hole plug in fig. 1 seen in the direction of the arrows V-V in fig. 4;

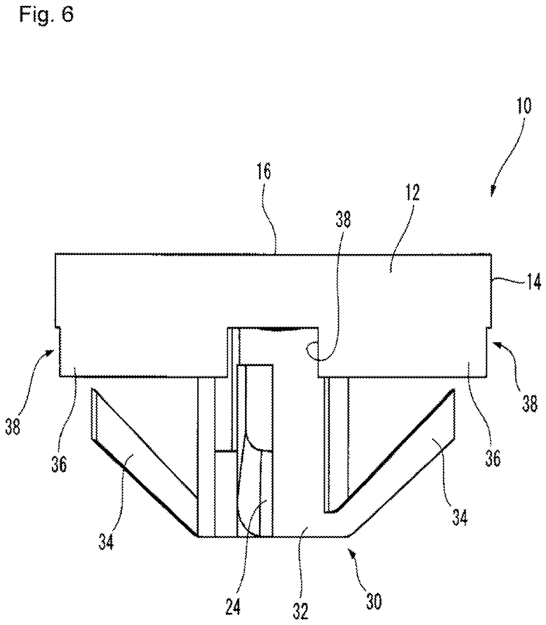

[Fig. 6] is a side view of the hole plug in fig. 1 seen in the direction of the arrows VI-VI in fig. 4;
[Fig. 7] is a side view of the hole plug in fig. 1 seen in the direction of the arrows VII-VII in fig. 4;
[Fig. 8] is a view in cross section of the hole plug in fig. 1 seen in the direction of the arrows VIII-VIII in fig. 4, illustrating a hole plug fixed in a hole formed in a plate, together with the plate;
[Fig. 9] is a view in cross section of the hole plug in fig. 1 seen in the direction of the arrows VIII-VIII in fig. 4, illustrating a hole plug fixed in a hole formed in a plate, together with the plate, and depicting a case in which the hole plug is fixed in a larger hole than that in fig. 8; and
[Fig. 10] is a bottom view seen in the same direction as in fig. 4, illustrating a hole plug fixed in a hole formed in a plate, together with the plate.

### [Mode of Embodiment of the Invention]

A preferred mode of embodiment of the present invention will be described below with reference to the appended drawings.

A hole plug 10 according to this mode of embodiment comprises a main body 12 which may be formed from plastic, rubber or a metal, etc. The main body 12 comprises a substantially cylindrical outer circumferential rib 14 having a center axis O, and a ledge portion 16 extending perpendicularly to the center axis O and joined to an upper edge portion 18 of the outer circumferential rib 14. A center opening 20 and slits 42 are formed in the ledge portion 16. An inner edge 22 of the ledge portion 16 is defined by the center opening 20. As depicted, the main body 12 is formed with a substantially cylindrical shape having the center axis O, but it may be formed with other dimensions or another shape such as an elliptical or oval shape, a rectangular shape, or a triangular shape.

A plurality of leg portions 36 are formed on a lower end of the rib 14 and gaps 38 are formed between the leg portions 36. The gaps 38 provide openings with a workpiece when the hole plug 10 is fixed in a hole in the workpiece.

The main body 12 comprises a plurality of wings 24 serving as a fixing member, and a centering rib 30. The wings 24 and the centering rib 30 are joined to the inner edge 22 of the ledge portion 16 by means of a support 26 extending in the direction of the center axis O of the main body 12. The wings 24 and the centering rib 30 protrude from the ledge portion 16 either downward, or forward in the direction of advance of the hole plug 10.

The wings 24 comprise polygonal plate members extending along the diameter of the main body 12 substantially in the opposite direction relative to the center O of the main body 12, each comprising a front edge inclined portion 24a and a rear edge inclined portion 24b. Each of the wings 24 is joined at one end to the support 26 by means of a first bridge portion 28a. The front edge inclined portions 24a are inclined in such a way as to approach the center axis O in a tip-end direction along the center axis O of the main body 12, and the rear edge inclined portions 24b are inclined in the opposite directions to the front edge inclined portions 24a, in other words are inclined in such a way as to become remote from the center axis O in the tip-end direction along the center axis O of the main body 12.

The centering rib 30 extends along a different diameter than the diameter on which the wings 24 are arranged, and is joined at both ends thereof to the support 26 by means of second bridge portions 28b. The centering rib 30 comprises arm portions 34 arranged at either ends. Each of the arm portions 34 is joined at one end thereof to the end of the centering rib 30. The arm portions 34 extend obliquely from the centering rib 30 in such a way as to become remote from the center axis O toward the ledge portion 16.

The hole plug 10 comprises an expansion layer 40 arranged between a lower surface of the ledge portion 16 and an inner surface of the rib 14. In a non-expanded state, the expansion layer 40 does not protrude from the inner edge 22 of the ledge portion 16 into the center opening 20 on the inside. When the expansion layer 40 is in the non-expanded state, a center passage is formed through the center opening 20. When the expansion layer 40 is in the non-expanded state, said expansion layer 40 may also protrude beyond the inner edge 22 in the radial direction toward the center axis O provided that a center passage allowing circulation of a liquid such as an electrodeposition paint is formed.

As depicted, the expansion layer 40 may be an annular member having a suitable shape and dimensions for the main body 12. Furthermore, the expansion layer 40 may extend from the lower surface of the ledge portion 16 to upper edges of the gaps 38 formed in the axial direction of the rib 14. Furthermore, the dimension from the lower surface of the ledge portion 16 to the upper edge of the gaps 38 may be constant. Alternatively, said dimension need not be constant. For example, it is possible to make an outer circumferential side of the expansion layer 40 thicker than an inner circumferential side or conversely to make it thinner.

The expansion layer 40 may be formed by a single layer or by laminating a plurality of independent thin expansion layers. For example, a first ring may be formed from a material which expands at a first temperature and a second ring may be formed from a second material, which expands at a second temperature different from the first temperature, and then stacked on the first ring. The expansion layer 40 may thus be formed from one or more expansion layers.

The expansion layer 40 may be formed from an expanding material which expands when heat is applied thereto or when it is subjected to a pressure fluctuation such as when the pressure rises or falls. For example, the expanding material may be a polyurethane foam or urethane foam, or a two-part closed-cell foam able to form a waterproof barrier. Another possible example of the expanding material is a foam resin or the like.

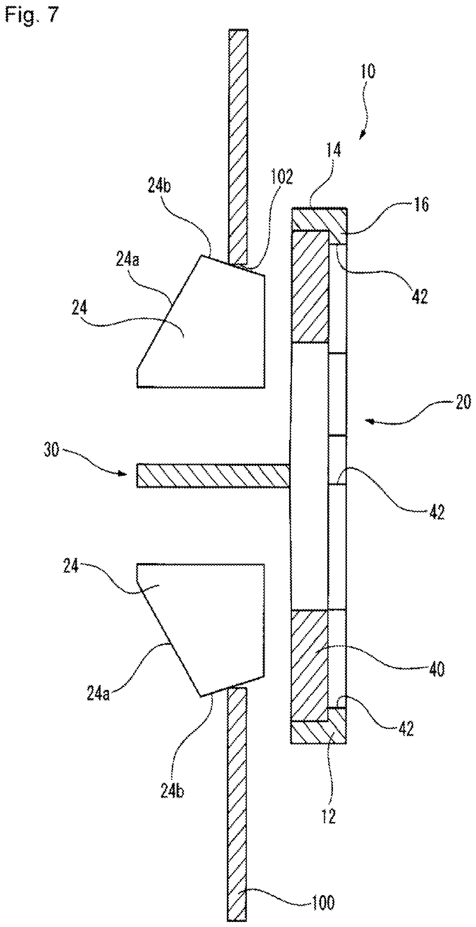

The action of this mode of embodiment will be described below with reference to fig. 7 to fig. 10.

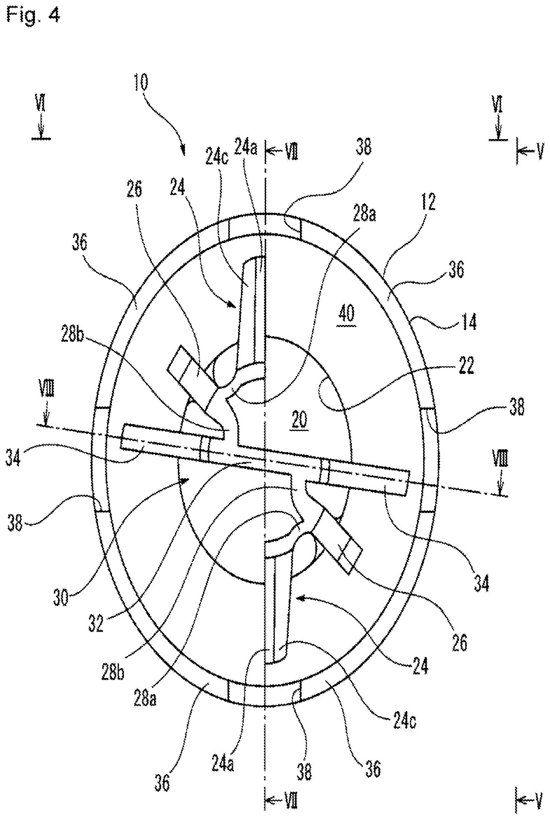

In fig. 7 which is a view in cross section of the hole plug 10 along the arrows VII-VII in fig. 4, and fig. 8 and 9 which are cross sections of the hole plug 10 along the arrows VIII-VIII in fig. 4, the hole plug 10 is fixed to a workpiece such as a panel 100. In this case, the tip ends of the leg portions 36 of the rib 14 are in abutment with a side surface of the panel 100. The hole plug 10 is fixed in a hole 102 such as a drainage outlet formed in the panel 100 by inserting the wings 24 serving as a fixing member and the centering rib 30 into the hole 102.

When the hole plug 10 is pushed in toward the hole 102 in the panel 100, the front edge inclined portion 24a of the wings 24 engages with the circumferential edge portion of the hole 102 in the panel 100 and the wings 24 are pressed to the inside in the radial direction. Here, a beveled portion 24c is formed on the front edge inclined portion 24a, so the wings 24 are pressed in a circumferential direction at the same time as they are pressed to the inside in the radial direction. As a result, the first bridge portion 28a joining the wings 24 and the support 26 flexes, and the wings 24 rotate about the support 26. When the hole plug 10 is pressed toward the panel 100 in this way, the wings 24 are inserted into the hole 102 while rotating about the support 26 so that the radial dimension thereof contracts. Here, engagement of the front edge inclined portion 24a of the wings 24 and the circumferential edge portion of the hole 102 centrally positions the hole plug 10 in the direction of the diameter joining the points of engagement between the front edge inclined portion 24a and the circumferential edge portion of the hole 102.

Furthermore, at this point, side surfaces 34b of the arm portions 34 of the centering rib 30 simultaneously engage with the circumferential edge portion of the hole 102. Engagement of the side surfaces 34b of the arm portions 34 and the circumferential edge portion of the hole 102 centrally positions the hole plug 10 in the direction of the extended diameter of a main body portion 32 of the centering rib 30.

When an apex 24d between the front edge inclined portion 24a and the rear edge inclined portion 24b of the wings 24 passes beyond the hole 102 in the panel 100, the rear edge inclined portion 24b engages with the circumferential edge portion of the hole 102, at which point the wings 24 are pressed against the circumferential edge portion of the hole 102 by the elastic force of the first bridge portion 28a, and engagement of the rear edge inclined portion 24b and the circumferential edge portion of the hole 102 causes the hole plug 10 to be subjected to a force in the direction in which it is pulled into the hole 102 in the panel 100 along the center axis O and the direction of the diameter joining the points of engagement between the rear edge inclined portion 24b and the circumferential edge portion of the hole 102. This force in the diameter direction is at a minimum value when the distance between the points of engagement of the wings 24 with the circumferential edge portion of the hole 102 is longest, and therefore the wings 24 are ultimately held at the position where the distance between the engagement points is longest.

The hole plug 10 is thus fixed at a position where the leg portions 36 of the rib 14 are in abutment with the side surface of the panel 100, by means of the abovementioned axial pulling force, the force in the direction of the diameter joining the points of engagement between the rear edge inclined portion 24b of the wings 24 and the circumferential edge portion of the hole 102, and the force in the direction of the diameter joining the points of engagement between the side surfaces 34b of the arm portions 34 of the centering rib 30 and the circumferential edge portion of the hole 102.

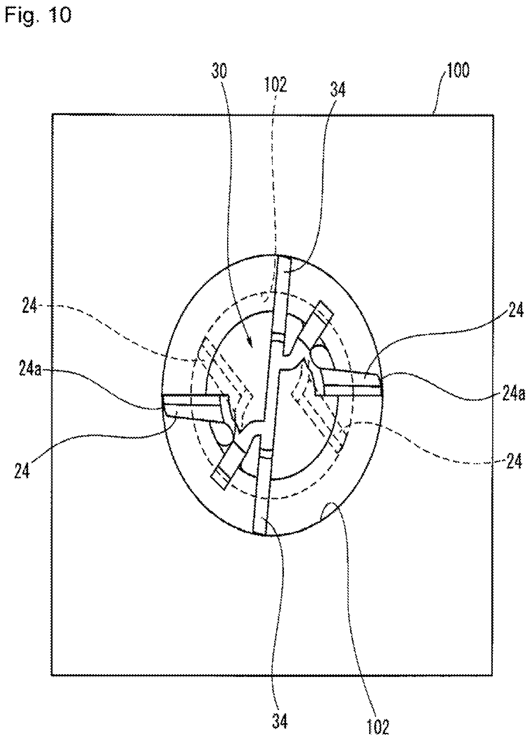

According to this mode of embodiment, the wings 24 rotate by a larger amount about the support 26 when the hole 102 is small, as illustrated by the broken line in fig. 10, in comparison with when the hole 102 illustrated by the solid line in fig. 10 is large, and as a result the maximum radius of the wings 24 in relation to the center axis O is smaller. The hole plug 10 according to this mode of embodiment thus has variable dimensions in the radial direction of the wings 24 and can be matched to holes having diameters in a given range.

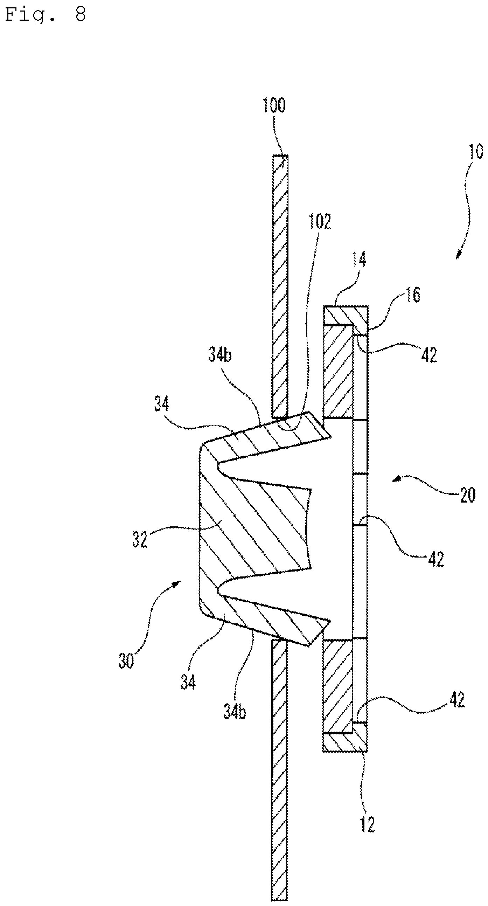

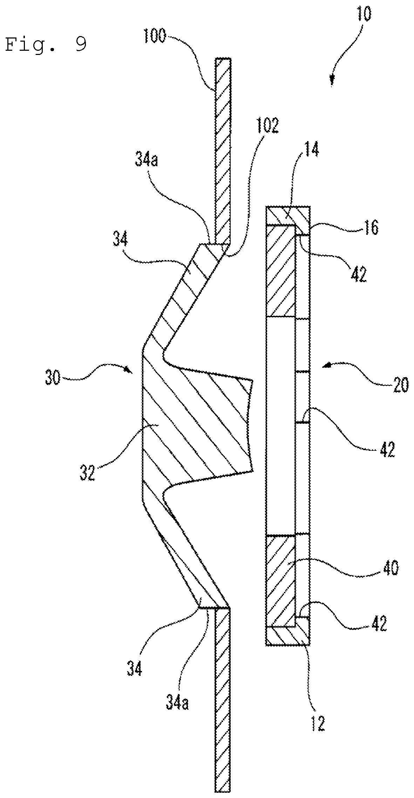

Furthermore, the centering rib 30 may also deform in such a way as to match the diameter of the hole 102. That is to say, as illustrated in fig. 8 and 9, the angle of the arm portions 34 varies with respect to the main body portion 32 of the centering rib 30. The arm portions 34 are matched to the diameter of the hole 102 by virtue of the fact that the angle with respect to the main body portion 32 is variable, and the position of engagement with the inner edge portion of the hole 102 at the side surfaces 34b thereof varies. As illustrated in fig. 9, a situation in which tip ends 34a of the arm portions 34 engage with the inner edge portion of the hole 102 constitutes the largest hole 102 in which the centering rib 30 can be fitted.

The wings 24 serving as a fixing member and the arm portions 34 of the centering rib 30 are inserted into the hole 102 in the panel 100 until the leg portions 36 of the rib 14 come into abutment with the surface of the panel 100 serving as the workpiece, and the hole plug 10 is fixed in the hole 102 as a result. The workpiece to which the hole plug 10 is fixed is then coated with a liquid paint such as an electrodeposition paint by immersion in said liquid paint. When the workpiece is lifted out of the liquid paint, said liquid paint is discharged from the center opening 20 in the non-expanded hole plug 10. When the temperature is raised in order to perform bake-coating, for example, after the liquid paint has been discharged, the expansion layer 40 expands and the side surface passage afforded by the opening 20 and the gaps 38 is closed off, whereby the hole 102 is closed off. The expansion layer 40 may equally expand as a result of a change in pressure rather than a change in temperature.

### [Key to Symbols]

- 10...: Hole plug
- 12...: Main body
- 14...: Rib
- 16...: Ledge portion
- 18...: Upper edge portion
- 20...: Center opening
- 22...: Inner edge
- 24...: Wing
- 24a...: Front edge inclined portion
- 24b...: Rear edge inclined portion
- 24c...: Beveled portion
- 24d...: Apex
- 26...: Support
- 28a...: First bridge portion
- 28b...: Second bridge portion
- 30...: Centering rib
- 32...: Main body portion
- 34...: Arm portion
- 34a...: Tip end
- 34b...: Side surface
- 36...: Leg portion
- 38...: Gap
- 40...: Expansion layer
- 42...: Slit
- 100...: Panel
- 102...: Hole

## Claims

1. A hole plug (10) which is fixable in a hole (102) formed in a workpiece (100), comprising:
a main body (12) having a center opening (20);
a fixing member (24) for fixing the main body in the hole in the workpiece; and
an annular expansion layer (40) attached to the main body, which expands inside the hole to form a liquid-tight shield,
**characterised in that**, the fixing member is formed in such a way as to be insertable into the hole when the hole plug is to be fixed in the hole, and said fixing member is engageable with an inner edge portion of the hole (102) at various radial positions according to the diameter of said hole when said hole plug is fixed in the hole, the fixing member being subjectable to a force from the inner edge portion of the hole to the inside in the radial direction so that resistance to removal from the hole is produced.

2. The hole plug as claimed in claim 1, wherein the fixing member (24) comprises a pair of wings (24) arranged substantially on the diameter of the main body (12), said wings being engageable with a circumferential edge portion of the hole (102) so as to be biased to the inside in the radial direction of the main body.

3. The hole plug as claimed in claim 2, wherein the wings (24) comprise a front edge inclined portion (24a) which is inclined in a tip-end direction along a center axis (0) of the main body in such a way as to approach said center axis, and a rear edge inclined portion (24b) which is inclined in a tip-end direction along the center axis (0) on the opposite side to the front edge inclined portion (24a) in such a way as to become remote from said center axis (0).

4. The hole plug as claimed in claim 2, wherein the main body (12) further comprises a centering rib (30) which extends in the diameter direction of the main body and is intended for positioning the main body in the center with respect to the hole (102) when the hole plug is fixed in the hole.

5. The hole plug as claimed in claim 4, wherein the centering rib (30) comprises a main body portion (32) extending along a different diameter than the diameter on which the wings (24) are arranged, and an arm portion (34) pivotably joined to both ends of the main body portion (32), the arm portion being provided in such a way as to contract in a tip-end direction along the center axis (0) of the main body (12).

## Patentansprüche

1. Lochstopfen (10), der in einem Loch (102) befestigbar ist, das in einem Werkstück (100) ausgebildet ist, umfassend:
einen Hauptkörper (12) mit einer Mittelöffnung (20);
ein Befestigungselement (24) zum Befestigen des Hauptkörpers in dem Loch im Werkstück; und
eine ringförmige Ausdehnungsschicht (40), die am Hauptkörper befestigt ist und sich innerhalb des Lochs ausdehnt, um eine flüssigkeitsdichte Abschirmung auszubilden,
**dadurch gekennzeichnet, dass** das Befestigungselement so ausgebildet ist, dass es in das Loch einführbar ist, wenn der Lochstopfen im Loch befestigt werden soll, und das Befestigungselement mit einem inneren Kantenabschnitt des Lochs (102) an verschiedenen radialen Positionen entsprechend dem Durchmesser des Lochs in Eingriff bringbar ist, wenn der Lochstopfen im Loch befestigt wird, wobei das Befestigungselement einer Kraft vom inneren Kantenabschnitt des Lochs nach innen in der radialen Richtung ausgesetzt werden kann, sodass ein Widerstand gegen das Entfernen aus dem Loch erzeugt wird.

2. Lochstopfen nach Anspruch 1, wobei das Befestigungselement (24) ein Paar Flügel (24) umfasst, die im Wesentlichen am Durchmesser des Hauptkörpers (12) angeordnet sind, wobei die Flügel mit einem Umfangskantenabschnitt des Lochs (102) in Eingriff bringbar sind, um in der radialen Richtung des Hauptkörpers nach innen vorgespannt zu werden.

3. Lochstopfen nach Anspruch 2, wobei die Flügel (24) einen geneigten Vorderkantenabschnitt (24a) umfassen, der in Richtung des vorderen Endes entlang einer Mittelachse (0) des Hauptkörpers geneigt ist, so dass er sich der Mittelachse nähert, und einen geneigten Hinterkantenabschnitt (24b), der in Richtung des vorderen Endes entlang der Mittelachse (0) auf der dem geneigten Vorderkantenabschnitt (24a) gegenüberliegenden Seite geneigt ist, so dass er sich von der Mittelachse (0) entfernt.

4. Lochstopfen nach Anspruch 2, wobei der Hauptkörper (12) ferner eine Zentrierrippe (30) umfasst, die sich in der Richtung des Durchmessers des Hauptkörpers erstreckt und dazu dient, den Hauptkörper in Bezug auf das Loch (102) in der Mitte zu positionieren, wenn der Lochstopfen im Loch befestigt ist.

5. Lochstopfen nach Anspruch 4, wobei die Zentrierrippe (30) einen Hauptkörperabschnitt (32) umfasst, der sich entlang eines Durchmessers erstreckt, der sich von dem Durchmesser unterscheidet, an dem die Flügel (24) angeordnet sind, und einen Armabschnitt (34), der schwenkbar mit beiden Enden des Hauptkörperabschnitts (32) verbunden ist, wobei der Armabschnitt so bereitgestellt ist, dass er sich in Richtung des vorderen Endes entlang der Mittelachse (0) des Hauptkörpers (12) zusammenzieht.

## Revendications

1. Bouchon de trou (10) qui peut être fixé dans un trou (102) formé dans une pièce à travailler (100), comprenant :
un corps principal (12) ayant une ouverture centrale (20) ;
un élément de fixation (24) pour fixer le corps principal dans le trou dans la pièce à travailler ; et
une couche d'expansion annulaire (40) attachée au corps principal, qui s'étend à l'intérieur du trou pour former un écran étanche aux liquides,
**caractérisé en ce que** l'élément de fixation est formé de manière à pouvoir être inséré dans le trou lorsque le bouchon de trou doit être fixé dans le trou, et ledit élément de fixation peut venir en prise avec une partie de bord interne du trou (102) à diverses positions radiales en fonction du diamètre dudit trou lorsque ledit bouchon de trou est fixé dans le trou, l'élément de fixation pouvant être soumis à une force provenant de la partie de bord interne du trou vers l'intérieur dans la direction radiale de telle sorte qu'une résistance à l'enlèvement hors du trou soit produite.

2. Bouchon de trou selon la revendication 1, dans lequel l'élément de fixation (24) comprend une paire d'ailes (24) agencées essentiellement sur le diamètre du corps principal (12), lesdites ailes pouvant venir en prise avec une partie de bord circonférentiel du trou (102) de manière à être sollicitées vers l'intérieur dans la direction radiale du corps principal.

3. Bouchon de trou selon la revendication 2, dans lequel les ailes (24) comprennent une partie inclinée de bord avant (24a) qui est inclinée dans une direction d'extrémité le long d'un axe central (0) du corps principal de manière à s'approcher dudit axe central, et une partie inclinée de bord arrière (24b) qui est inclinée dans une direction d'extrémité le long de l'axe central (0) sur le côté opposé à la partie inclinée de bord avant (24a) de manière à s'éloigner dudit axe central (0).

4. Bouchon de trou selon la revendication 2, dans lequel le corps principal (12) comprend en outre une nervure de centrage (30) qui s'étend dans la direction du diamètre du corps principal et est prévue pour le positionnement du corps principal au centre par rapport au trou (102) lorsque le bouchon de trou est fixé dans le trou.

5. Bouchon de trou selon la revendication 4, dans lequel la nervure de centrage (30) comprend une partie de corps principal (32) qui s'étend le long d'un diamètre différent du diamètre sur lequel les ailes (24) sont agencées, et une partie de bras (34) reliée pivotante aux deux extrémités de la partie de corps principal (32), la partie de bras étant disposée de manière à se contracter dans une direction d'extrémité le long de l'axe central (0) du corps principal (12).
